(19) Europäisches Patentamt
European Patent Office
Office européen des brevets

(11) **EP 2 369 781 B1**

(12) **EUROPEAN PATENT SPECIFICATION**

(45) Date of publication and mention
of the grant of the patent:
**21.11.2012  Bulletin 2012/47**

(51) Int Cl.:
*H04L 12/12* (2006.01)   *H04L 12/28* (2006.01)
*H04L 12/56* (2006.01)   *H04L 27/34* (2006.01)
*H04M 11/06* (2006.01)

(21) Application number: **10305275.9**

(22) Date of filing: **19.03.2010**

(54) **Guaranteed QOS in low-power mode**

Garantierte Dienstgüte in Modus mit niedrigem Stromverbrauch

QOS garantie en mode faible puissance

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**28.09.2011  Bulletin 2011/39**

(73) Proprietor: **Alcatel Lucent
75007 Paris (FR)**

(72) Inventors:
• **Van Bruyssel, Danny
B-2820 Bonheiden (BE)**
• **Vanderhaegen, Dirk
1780 Wemmel (BE)**

(74) Representative: **ALU Antw Patent Attorneys
Copernicuslaan 50
2018 Antwerpen (BE)**

(56) References cited:
**EP-A2- 1 605 655      WO-A1-2009/123541
US-A1- 2004 253 980   US-A1- 2006 188 035
US-B1- 6 711 207       US-B1- 7 058 027**

• **GEORGE GINIS: "Low-power modes for ADSL2
and ADSL2+" INTERNET CITATION 31 January
2005 (2005-01-31), pages 1-14, XP002524987
Retrieved from the Internet: URL:http://
focus.ti.com/pdfs/bcg/adsl2_low_power_wp.pdf
[retrieved on 2009-04-22]**

**Description**

Technical Field of the Invention

The present invention generally relates to power savings in Information and Communication Technology (ICT) equipment.

Technical Background of the Invention

Power reduction in ICT equipment is getting more and more attention worldwide, as evidenced by the Code of Conduct (CoC) on energy consumption of broadband equipment defined by the European Commission (EC) and similar requirements in the United States, and by related green announcements and initiatives.

The recommendation entitled "Asymmetric digital subscriber line transceivers 2 (ADSL2)" published by the International Telecommunication Union (ITU) in January 2005, ref. G.992.3, defines two power modes for operating a Digital Subscriber Line (DSL) channel:

- a reference-power mode L0, also referred to as showtime, wherein the transceiver units operate at a reference (or nominal) transmit power so as to achieve the agreed data rate,

- a low-power mode L2, wherein the transceiver units operate with a reduced downstream data rate so as to achieve a certain power reduction.

L2 low-power state has been also defined in G.992.5 ITU recommendation (ADSL2+) by reference to ADSL2 standard.

L2 mode was originally intended to pass a low amount of traffic (e.g., during inactivity periods) with a reduced transmit power. G.993.2 standard defines seamless transitions between L0 and L2 link state.

The transceiver unit at the central office (or ATU-C) sends a L2 REQUEST command to the transceiver unit at the customer premises (or ATU-R) for switching from L0 to L2 link state.

When sending the L2 REQUEST command, the ATU-C shall specify parameters describing the minimum and maximum aggregate transmit Power CutBack (PCB). The ATU-C shall also specify the minimum and maximum required data rate for each configured latency path.

Upon receipt of the L2 REQUEST command, the ATU-R shall evaluate the parameters found in the L2 REQUEST command and the current operating conditions of the downstream receiver. If the parameters are valid but describe an operating condition that cannot currently be satisfied (e.g., because the current line and noise conditions cannot support the configuration), the ATU-R shall send a L2 REJECT command. If the parameters can be met, the ATU-R shall send a L2 GRANT command which contains the actual PCB value, and necessary modifications to the bits and gain tables to be used by the transceiver units in downstream direction.

The ATU-C shall send back a SYNC flag for acknowledging the good receipt of the L2 GRANT command within a 400 ms time frame. The actual entry into L2 state takes place a predetermined number of Discrete Multi-Tones (DMT) symbols after the SYNC flag is issued.

The ATU-C may also send a L2 TRIM REQUEST command to ask for a further power reduction while sticking to the L2 data rate as specified in the L2 GRANT command. By so doing, the transmit power is step-wise decreased till the required noise margin is reached.

Upon receipt of the L2 TRIM REQUEST command, the ATU-R shall evaluate the proposed PCB value found in the L2 TRIM REQUEST command and the current operating conditions of the downstream receiver. If the proposed PCB value describes an operating condition that cannot currently be satisfied, the ATU-R shall send a L2 REJECT command. If the proposed PCB value can be met, the ATU-R shall send a L2 TRIM GRANT command.

The following configuration parameters are related to L2 low-power mode and are statically configured through a Management Information Base (MIB). The L0-TIME parameter represents the minimum time (in seconds) between exit from L2 low-power state and the next entry into L2 low-power state. The L2-TIME parameter represents the minimum time (in seconds) between entry into L2 low-power state and the first L2 TRIM REQUEST command, or between two consecutive L2 TRIM REQUEST commands. The L2-ATPR parameter represents the maximum aggregate transmit power reduction that is allowed in a L2 REQUEST or L2 TRIM REQUEST command. The L2-ATPRT parameter represents the total maximum aggregate transmit power reduction that is allowed in L2 low-power state.

Thus, the maximum PCB value in a L2 REQUEST command shall be limited by the following constraint:

$$\texttt{maximum\_PCB} - \texttt{PCB(L0)} \leq \texttt{L2-ATPR} \quad (1),$$

where maximum_PCB is the maximum aggregate PCB value in the L2 REQUEST command, and where PCB(L0) is the PCB value of the L0 state.

Similarly, the proposed PCB value in any L2 TRIM REQUEST command shall be limited by the following constraint:

$$\text{PCB(proposed)} - \text{PCB(current)} \le \text{L2-ATPR} \quad (2),$$

where PCB(proposed) is the proposed PCB value in the L2 TRIM REQUEST command, and where PCB(current) is the PCB value currently used in L2 low-power state.

Finally, all PCB values in L2 low-power state (i.e., the maximum PCB value in a L2 REQUEST command, and the proposed PCB value in any L2 TRIM REQUEST command) shall be limited by the following constraint:

$$\text{PCB} - \text{PCB(L0)} \le \text{L2-ATPRT} \quad (3),$$

where PCB is any PCB value in L2 low-power state.

The conditions for switching into L2 state have been left unspecified. Typically, the amount of downstream traffic transmitted over the DSL channel is metered, and when this amount has been measured as being persistently below a predetermined threshold (e.g., 128 kbit/s) then a L2 REQUEST command is issued for entering the L2 low-power state with that threshold plus some margin as required data rate.

The error protection settings, such as the Reed-Solomon (RS) code rate and the interleaving depth, that are configured for L0 showtime mode remain in force for L2 low-power mode. As a consequence, the Impulse Noise Protection (INP), which is defined as the number of consecutive erroneous DMT symbols that can be sustained by the error code, and the incurred delay, substantially increase, which increase being in the same proportion as the ratio between L0 and L2 data rates. While an increased INP does not pose any issue, an increased delay may violate the configured Quality of Service (QoS), and may severely impair certain low-speed communication services running during L2 mode.

The article entitled "Low-Power Modes for ADSL2 and ADSL2+" by George Ginis, ref. XP-002524987, and published in January 2005 as a white paper, gives a description of low-power modes for ADSL2/2+, as well as the ways these power states can be used and their respective restrictions.

The US patent 7,058,027 entitled "System and Methods for Asynchronous Transfer Mode and Internet Protocol" published on March 23, 2000, proposes a protocol-independent error control system that assists in providing more reliable data transmission between endpoints, and that comprises an ATM adaptation layer for support of quality-critical and time-critical data, a rate converter using a priority scheme to adjust the data rate for different types of data, and an error-control sub-system optimized for error-prone links and capable of recognizing traffic from many kinds of network sources.

Summary of the Invention

It is an object of the present invention to overcome this and other shortcomings of the prior art.

In accordance with a first aspect of the invention, a transceiver unit is adapted to operate a communication channel in a first reference-power operating mode, to configure error control over said communication channel in accordance with a first required Quality of Service QoS and a first nominal data rate achievable over said communication channel during said first operating mode, and to issue a message whereby a peer transceiver unit is requested to switch operation of said communication channel from said first operating mode to a second low-power operating mode, wherein said transceiver unit is further adapted to encode a second required QoS achievable over said communication channel during said second operating mode into said message, and to adjust error control over said communication channel concomitantly with entry into said second operating mode and in accordance with said second required Qos and a second reduced data rate achievable over said communication channel during said second operating mode.

The first and second required Qos do not necessarily match as L0 and L2 modes do not necessarily support the same grade of service. The first and second required Qos typically comprise a delay upper-bound and/or an INP lower bound.

By adjusting the error control settings, such as an interleaving depth and/or an error code rate, in dependence of a reduced data rate that can be achieved during L2 mode with a reduced power budget, and further by time-coordinating the entry into force of the adjusted error control settings with the entry into L2 mode, the configured QoS, such as a maximum delay, remains continuously guaranteed while benefiting from the L2 low-power consumption.

Just before entry into L2 state, the traffic buffers, wherein data packets (or cells or frames) are held before being processed by the lower layers, are almost empty on account of the L0 data rate exceeding the traffic throughput by a large extent. This means that, at this point in time, it is allowed to hold back data packets in the traffic buffers while the error control logic (e.g., the RS encoder and the interleaver) is fed with dummy bytes. When the last meaningful bytes are drained out of the error control logic (still at the L0 nominal data rate), the error control logic is re-configured with suitable error control settings for entry into L2 state. Thus, the reconfiguration of the error control logic is harmless for the user traffic, and the reconfiguration time is kept low to make sure that the traffic buffers do not overflow, and that the Packet Delay variation (PDV) is within bounds.

This invention enables the offering of services with guaranteed QoS during L2 mode, instead of just being able to send keep-alive packets. An example could be running Standard Definition TV (SDTV) in L2 mode, and only switch to L0 mode when High Definition TV (HDTV) is delivered. Another example would be to run Voice over IP (VoIP) calls in L2 mode during night hours. This would in turn mean that a larger proportion of lines will operate in L2 mode during a longer period of time, leading to larger overall power savings.

In one embodiment of the invention, said adjustment is further made in accordance with said first required QoS and said first data rate.

Error control is adjusted with regard to both L0 and L2 data rates so as to prepare for the next L2 exit. A re-configuration of the error control logic, and a corresponding stalling of user traffic, is thus avoided upon L2 exit, i.e. when the traffic buffers are relatively full on account of the L2 reduced data rate no longer fitting the user traffic throughput.

In one embodiment of the invention, said transceiver unit is further adapted to further adjust error control over said communication channel concomitantly with exit from said second operating mode, which further adjustment being made in accordance with said first required QoS and said first data rate.

Error control is adjusted a first time for L2 mode only, and in dependence of the reduced data rate. When L0 mode is restored, error control is adjusted a second time, and in dependence of the nominal data rate. In this embodiment, the traffic buffers shall be able to accommodate for the typical traffic built-up upon L2 exit, as well as for the user traffic being held back on account of the further re-configuration of the error control logic.

Such a transceiver unit may form part of an access node, such as a Digital subscriber Line Access Multiplexer (DSLAM), a bridge, an edge router, etc.

In accordance with a second aspect of the invention, a transceiver unit is adapted to operate a communication channel in a first reference-power operating mode, to configure error control over said communication channel in accordance with a first required Quality of service QoS and a first nominal data rate achievable over said communication channel during said first operating mode, and to receive a message whereby a peer transceiver unit requests said transceiver unit to switch operation of said communication channel from said first operating mode to a second low-power operating mode,
wherein said transceiver unit is further adapted to decode a second required QoS achievable over said communication channel during said second operating mode from said message, and to adjust error control over said communication channel concomitantly with entry into said second operating mode and in accordance with said second required QoS and a second reduced data rate achievable over said communication channel during said second operating mode.

In one embodiment of the invention, said transceiver unit is adapted to encode parameter values indicative of said adjustment into a further message sent to said peer transceiver unit in response to said message.

The ATU-R determines new error control settings in accordance with the required QoS, and returns adjusted values for error control parameters in the L2 GRANT message back to the ATU-C for coordinated error control adjustment.

Such a transceiver unit may form part of a subscriber device, such as a modem, a home gateway, a home bridge, a home router, etc

In accordance with a third aspect of the invention, a method comprises the steps of operating a communication channel in a first reference-power operating mode, configuring error control over said communication channel in accordance with a first required Quality of Service QoS and a first nominal data rate achievable over said communication channel during said first operating mode, and issuing a message whereby switching operation of said communication channel from said first operating mode to a second low-power operating mode is requested,
wherein said method further comprises the steps of encoding a second required QoS achievable over said communication channel during said second operating mode into said message, and adjusting error control over said communication channel concomitantly with entry into said second operating mode and in accordance with said second required QoS and a second reduced data rate achievable over said communication channel during said second operating mode.

In accordance with a fourth aspect of the invention, a method comprises the steps of operating a communication channel in a first reference-power operating mode, configuring error control over said communication channel in accordance with a first required Quality of Service QoS and a first nominal data rate achievable over said communication channel during said first operating mode, and receiving a message whereby switching operation of said communication channel from said first operating mode to a second low-power operating mode (L2) is requested,
wherein said method further comprises the steps of decoding a second required QoS achievable over said communication channel during said second operating mode from said message, and adjusting error control over said communication channel concomitantly with entry into said second operating mode and in accordance with said second required QoS and a second reduced data rate achievable over said communication channel during said second operating mode.

Embodiments of a method according to the invention correspond with the embodiments of a transceiver unit according to the invention.

Brief Description of the Drawings

The above and other objects and features of the invention will become more apparent and the invention itself will be best understood by referring to the following description of an embodiment taken in conjunction with the accompanying drawings wherein:

- fig. 1 represents a DSL communication system,
- fig. 2 represents an ATU-C according to the invention,
- fig. 3 represents an ATU-R according to the invention,
- fig. 4A and 4B represent a plot of delay and INP constraints respectively in dependence of downstream L0 and L2 data rates,
- fig. 5 represents a plot of downstream traffic throughput, downstream line rate and transceiver operating mode versus time, and
- fig. 6 represents a message flow chart between an ATU-C and an ATU-R.

Detailed Description of the Invention

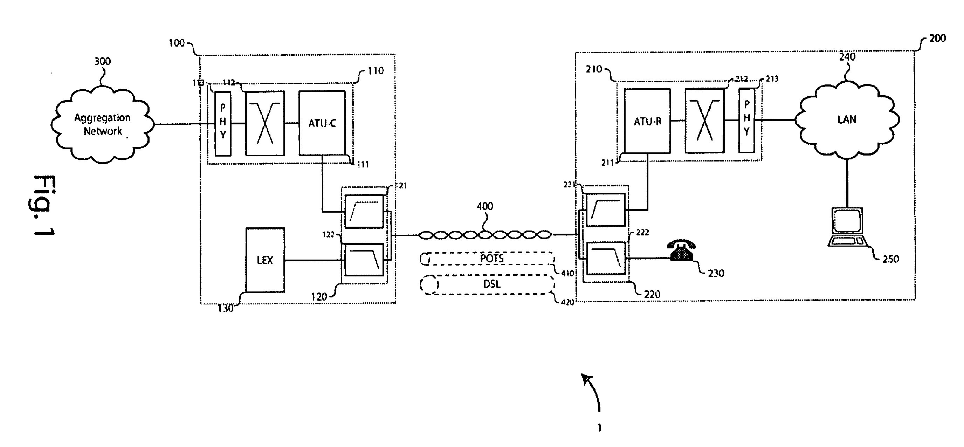

There is seen in fig. 1 a DSL communication system 1 comprising the following functional blocks:

- a $_DS_{LAM}$ arrangement 100 at a central office,
- a Customer Premises Equipment (CPE) arrangement 200 at customer premises,
- an aggregation network 300 for aggregating subscriber traffic, and
- a subscriber line 400, such as an Unshielded Twisted Copper (UTC) pair, for connecting the central office to the customer premises.

The DSLAM arrangement 100 is coupled to the aggregation network 300, and to the CPE arrangement 200 via the subscriber line 400.

The subscriber line 400 supports both Plain old Telephony Service (POTS) through a POTS channel 410 and broadband communications through a DSL channel 420.

The access node arrangement 100 comprises the following functional blocks:

- a DSLAM 110,
- a splitter 120 for frequency-multiplexing/splitting a DSL signal and a POTS signal over/from the same copper pair, and
- a local exchange 130 (or LEX) for switching POTS communications.

The DSLAM 110 and the local exchange 130 are coupled to the splitter 120, which splitter 120 being further coupled to the subscriber line 400.

The DSLAM 110 comprises functional blocks, the most noticeable of which are:

- a DSL transceiver unit 111 (or ATU-C) for operating the DSL channel 420,
- a switch fabric 112, such as an Ethernet or Asynchronous Transfer Mode (ATM) switch fabric, and
- a network transceiver unit 113 (or PHY) for connecting to the aggregation network 300.

The DSL transceiver unit 111 is coupled to the switch fabric 112. The switch fabric 112 is further coupled to the network transceiver unit 113. The network transceiver unit 113 is further coupled to the aggregation network 300.

The splitter 120 comprises:

- a high-pass filter 121 for passing DSL signals and filtering out POTS signals, and
- a low-pass filter 122 for passing POTS signals and filtering out DSL signals.

The DSL transceiver unit 111 is coupled to the high-pass filter 121, and the local exchange 130 is coupled to the low-pass filter 122.

The high-pass filter 121 may form part of the DSLAM 110.

The CPE arrangement 200 comprises the following functional blocks:

- a CPE 210, such as a modem, a router, a gateway,
- a splitter 220 for frequency-combining/splitting a DSL signal and a POTS signal over/from the same copper pair,
- a telephone handset 230,
- a user terminal 250, such as a Personal Computer (PC), and
- a Local Area Network (LAN) facility 240, for inter-connecting the user terminal 250 and the CPE 210.

The CPE 210 and the telephone handset 230 are coupled to the splitter 220, which splitter 220 being further coupled to the subscriber line 400. The CPE 210 and the user terminal 250 are further coupled to the LAN 240.

The CPE 210 comprises functional blocks, the most noticeable of which are:

- a DSL transceiver unit 211 (or ATU-R) for operating the DSL channel 420,
- a switch fabric 212, such as an Ethernet switch fabric, and
- a local transceiver unit 213 (or PHY) for connecting to the LAN 240.

The DSL transceiver unit 211 is coupled to the switch fabric 212. The switch fabric 212 is further coupled to the local transceiver unit 213. The local transceiver unit 213 is further coupled to the LAN 240.

The splitter 220 comprises:

- a high-pass filter 221 for passing DSL signals and filtering out POTS signals, and
- a low-pass filter 222 for passing POTS signals and filtering out DSL signals.

The DSL transceiver unit 211 is coupled to the high-pass filter 221, and the telephone handset 230 is coupled to the low-pass filter 222.

The high-pass filter 221 may form part of the CPE 210.

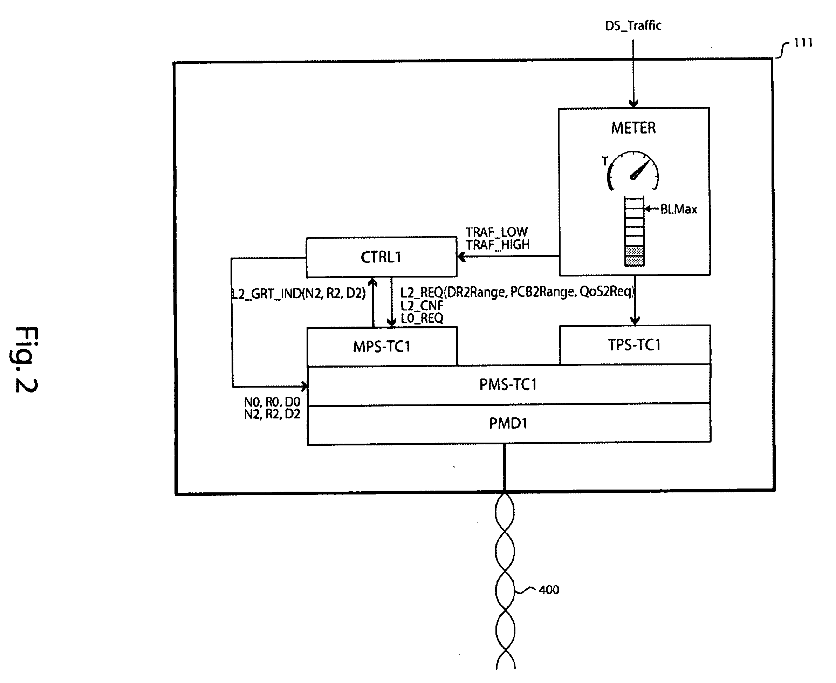

There is seen in fig. 2 further details about the transceiver unit 111 with regard to the invention. The transceiver unit 111 comprises functional blocks, the most noticeable of which are:

- a Physical Media Dependent (PMD) layer PMD1,
- a Physical Media Specific - Transmission Convergence (PMS-TC) layer PMS-TC1,
- a Transmission Protocol Specific - Transmission Convergence (TPS-TC) layer TPS-TC1,
- a Management Protocol Specific - Transmission Convergence (MPS-TC) layer MPS-TC1,
- a controller CTRL1, and
- a metering unit METER.

The layer PMD1 is coupled to the subscriber line 400. The layer PMS-TC1 is coupled to the layer PMD1. The layer TPS-TC1 and the layer MPS-TC1 are both coupled to the layer PMS-TC1. The metering unit METER is coupled to the layer TPS-TC1. The controller CTRL1 is coupled to the layer MPS-TC1 and to the layer PMS-TC1. The controller CTRL1 is further coupled to the metering unit METER.

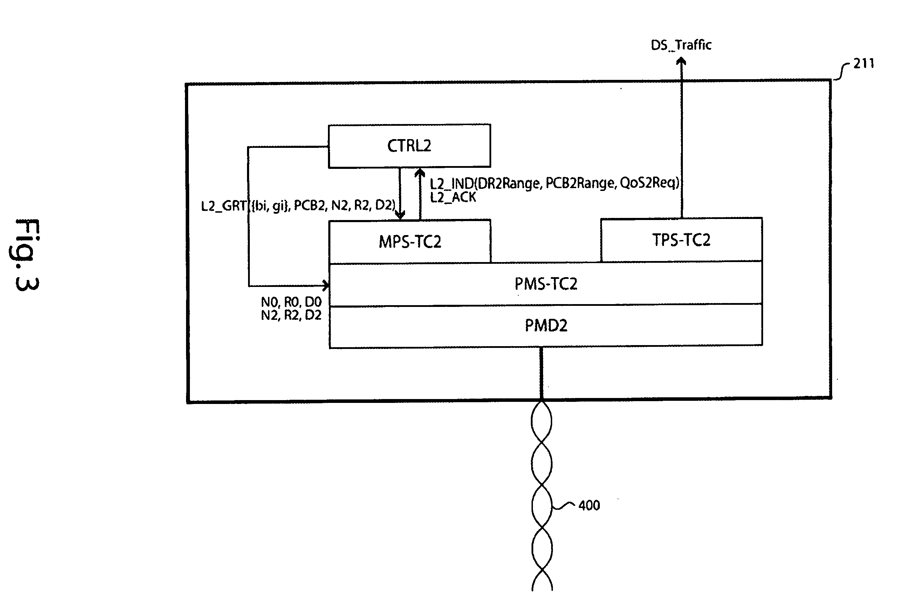

Similarly, there is seen in fig. 3 further details about the transceiver unit 211 with regard to the invention. The transceiver unit 211 comprises functional blocks, the most noticeable of which are:

- a PMD layer PMD2,
- a PMS-TC layer PMS-TC2,
- a TPS-TC layer TPS-TC2,
- a MPS-TC layer MPS-TC2, and
- a controller CTRL2.

The layer PMD2 is coupled to the subscriber line 400. The layer PMS-TC2 is coupled to the layer PMD2. The layer TPS-TC2 and the layer MPS-TC2 are both coupled to the layer PMS-TC2. The controller CTRL2 is coupled to the layer MPS-TC2 and to the layer PMS-TC2.

The principal functions of the PMD layer includes symbol timing generation and recovery, encoding and decoding, modulation and demodulation, echo cancellation (if implemented), line equalization, link start-up, and physical layer overhead (super-framing).

The principal functions of the PMS-TC layer includes data framing and frame synchronization, RS encoding and decoding (with byte error correction), data interleaving and deinterleaving, data scrambling and de-scrambling. The PMS-TC layer provides an Embedded Overhead Channel (EOC) that is used to transport control messages generated by the MPS-TC, TPS-TC, PMS-TC or PMD layers. The PMS-TC layer also provides CRC error detection for Bit Error Rate (BER) estimation, and Network Timing Reference (NTR) for oscillator's clock synchronization. The PMS-TC layer multiplexes the PMS-TC overhead with TPS-TC data streams for transmission over the DSL channel 420.

The TPS-TC is application specific and consists largely of adaptation of the customer interface data and control signals to the (a)synchronous data interface of the TPS-TC. Depending upon the specific application, the TPS-TC layer may support one or more channels.

The MPS-TC function provides procedures to facilitate the management of the ATU. Management information is exchanged between the MPS-TC functions through the EOC channel. The management information contains indications of anomalies and defects and related performance monitoring counters. In addition, management commands are defined for use by higher layer functions, presently L2 REQUEST, L2 GRANT, L2 REJECT, L2 TRIM REQUEST and L2 TRIM GRANT power management commands for use by the controller CTRL1 for switching back and forth between L0 and L2 states.

The metering unit METER is adapted to measure the rate of downstream traffic scheduled over the DSL channel 420 (see DS_user_traffic in fig. 2) versus a pre-configured traffic threshold T. when the downstream data rate is measured as being persistently below the threshold T during Ptime seconds, then a TRAF_LOW notification is issued towards the controller CTRL1.

The metering unit METER is further adapted to monitor the amount of backlogged downstream traffic in one or more transmit buffer queue wherein data packets are stored before being scheduled for transmission over the DSL channel 420 by the TPS-TC and lower layers. If the amount of backlogged traffic reaches a certain threshold BLMax, meaning the downstream traffic throughput exceeded for a certain time the downstream line rate configured for the DSL channel 420, then another TRAF_HIGH notification is immediately issued towards the controller CTRL1.

The controller CTRL1 is adapted to control the operating mode of the DSL channel 420 according to traffic load information supplied by the metering unit METER.

If downstream traffic has been measured as persistently below the threshold T, then the controller CTRL1 requests the layer MPS-TC1 to switch the DSL channel 420 into L2 low-power mode by issuing a L2_REQ request with minimum and maximum required data rate (actually minimum and maximum number of bits per latency path and per DMT symbol), minimum and maximum required PCB, and a required QoS.

The required QoS for L2 may comprise any of the following constraints:

- a maximum delay,
- a minimum INP,
- a maximum RS overhead.

If the amount of backlogged traffic exceeds the threshold BLMax, then the controller CTRL1 requests the layer MPS-TC1 to switch the DSL channel 420 back into L0 showtime mode by issuing a LO_REQ request, causing the layer MPS-TC1 to trigger a fast L2 exit procedure.

The controller CTRL1 further interfaces with the layer PMD-TC1 to initialize the RS encoder and the interleaver with first error control settings as initially determined by the ATU-R 211 during the initialization and training phase of the DSL channel 420, and further to re-configure the RS encoder and the interleaver on-the-fly with second error control settings as adjusted by the ATU-R 211 upon entry into L2 mode.

The controller CTRL2 is adapted to switch operation of the DSL channel 420 from L0 to L2 mode, and vice-versa, under remote control of the ATU-C 111 by means of L2 commands.

The controller CTRL2 is further adapted to determine first error control settings suitable to L0 show-time mode during the initialization and training phase of the DSL channel 420, and second error control settings suitable to L2 mode upon entry into L2 mode.

The first error control settings are determined in accordance with a nominal data rate that is achievable in L0 mode with a reference transmit power, and in accordance with a first required QoS QoS0Req.

The second error control settings are determined in accordance with a reduced data rate that is achievable in L2 mode with a reduced transmit power, and in accordance with a second required QoS QoS2Req. The second error control settings yields a new SNR coding gain, which together with the measured SNR plus a SNR margin, yields a new bit loading and gain table and an actual PCB value to be applied over the DSL channel 420, which values being in line with the L2 data rate and PCB requirements. The new bit loading and gain table, the actual PCB value and the adjusted error control parameter values are encoded into a L2 GRANT command and returned to the ATU-C for coordinated adjustment.

The controller CTRL2 further interfaces with the layer PMD-TC2 to initialize the RS decoder and the de-interleaver with first error control settings, and further to re-configure the RS decoder and the de-interleaver on-the-fly with second error control settings.

In a preferred embodiment, first error control settings comprise a first RS generating polynomial and corresponding first RS code rate value (N0, K0), and a first interleaving depth D0, and second error control settings comprise a second RS generating polynomial and corresponding second RS code rate value (N2, K2), and a second interleaving depth D2.

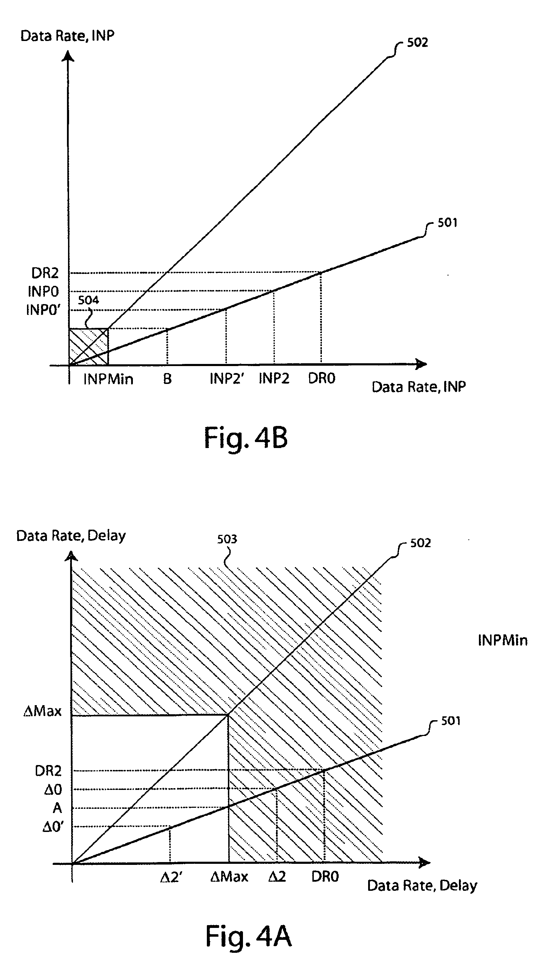

An exemplary embodiment for adjusting error control parameters now follows with reference to fig. 4A and 4B.

Let N denotes the number of bytes per RS codeword, R the number of RS overhead (or parity or redundant) bytes per RS codeword, D the interleaving depth, and S the number of DMT symbols over which a RS codeword spans (or spreading factor).

The spreading factor S is given by:

$$S = \frac{8 \times N}{L} \quad (1),$$

wherein L denotes the number of bits per DMT symbol.

The Impulse Noise Protection (INP) is defined as the number of consecutive corrupted DMT symbols that can be recovered by the RS code.

The INP and the interleaving/de-interleaving delay $\Delta$ are given by:

$$INP = \frac{1}{2}(S \times D) \times \left(\frac{R}{N}\right) = 4\frac{D \times R}{L} \quad (2)$$

(expressed in units of DMT symbols, and assuming no erasure detection),

$$\Delta = 2\frac{(N-1) \times (D-1)}{L} \approx 2\frac{N \times D}{L} \quad (3)$$

(expressed in milliseconds),
wherein 4000 symbols/s is assumed as DMT symbol rate

Decreasing INP, that is to say decreasing the immunity to impulse noise, can be achieved by:

- decreasing the RS overhead R, thereby increasing the useable data rate,
- decreasing the interleaving depth D, thereby decreasing the data path latency.

Decreasing the interleaving/de-interleaving delay can be achieved by:

- decreasing the RS codeword length N, thereby decreasing the useable data rate (assuming R is kept constant),
- decreasing the interleaving depth D, thereby decreasing the INP.

Let DRO and DR2 denote the data rates committed for L0 and L2 states respectively, INPO and INP2 the INPs for L0 and L2 states respectively, and $\Delta$0 and $\Delta$2 the interleaving/deinterleaving delays for L0 and L2 states respectively.

Fig. 4A represents a plot of data rate and interleaving/de-interleaving delay, and fig. 4B represents a plot of data rate and INP. Units have been purposely omitted.

The ratio between DRO and DR2 is plotted as a straight line 501, while the 1:1 ratio is plotted as the bisecting line 502. As can be seen from formulas (2) and (3), the ratio between $\Delta$0 and $\Delta$2 on one side, and between INP0 and INP2 on the other side, conforms to the same line 501 as plotted in fig. 4A and 4B respectively.

A maximum delay $\Delta$max is plotted in fig. 4A as a cross-hatched area 503, and a minimum INP INPMin is plotted in fig. 4B as another cross-hatched area 504. Delay and INP constraints are assumed identical for both L0 and L2 modes.

If the error control parameters were left unchanged upon entry into L2 state, and provided the initial delay $\Delta$0 configured for L0 state is above point A, then the maximum delay $\Delta$max would be exceeded (see $\Delta$2 in fig. 4A), while INP would be largely above the minimum required INP INPMin (see INP2 in fig. 4B).

To solve this, the ATU-R 211 decreases the delay incurred in L2 state by decreasing the RS codeword length N and/or the interleaving depth D, thereby yielding an adjusted delay $\Delta$2', and in such a way that the maximum delay $\Delta$max is complied with. This will in turn decreases the INP, thereby yielding an adjusted INP INP2'.

The ATU-R 211 could further make sure that the adjusted INP INP2' remains above point B, e.g. by increasing the RS overhead R, so as to guarantee good immunity against impulse noise when switching back to L0 state (see INPO' in fig. 4B).

Alternatively, the ATU-R 211 could reduce the INP beyond point B while staying above INPMin, yet a similar error control adjustment will need to take place upon L2 exit so as to guarantee INPMin.

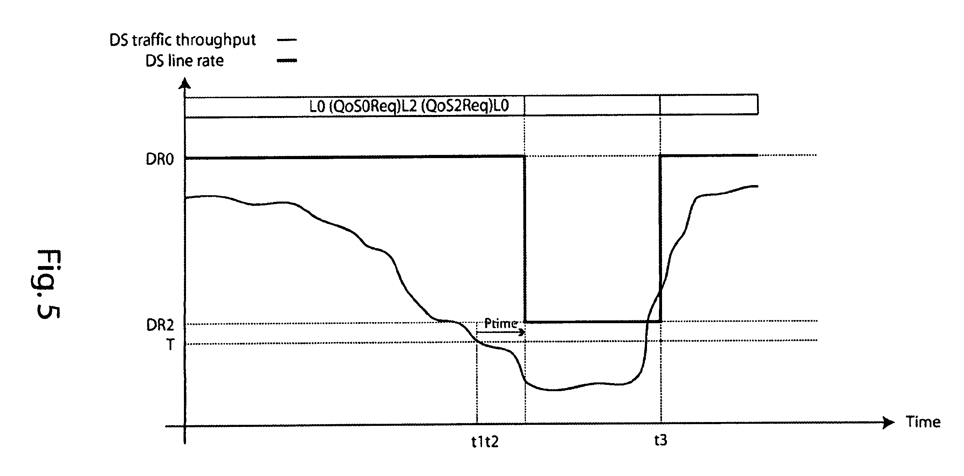

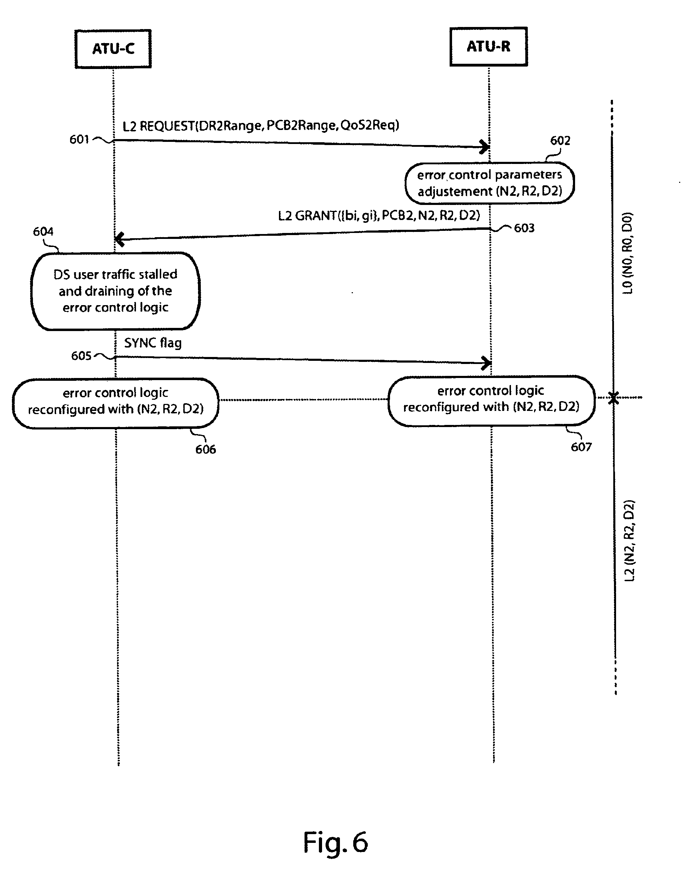

An operation of this embodiment now follows with reference to fig. 5, which shows an exemplary evolution of downstream traffic over time for a particular subscriber and corresponding downstream operating mode and line rate of the DSL channel 420, and further with reference to fig. 6, which shows L2 commands exchanged between the ATU-C 111 and the ATU-R 211 upon entry into L2 mode.

Initially, the ATU-C 111 and the AUT-R 211 enter L0 showtime mode after successful initialization and training of the DSL channel 420. The DSL channel 420 is configured in showtime with a reference downstream aggregate transmit power and a corresponding downstream data rate DR0, which value depending on the line and noise conditions. The DSL channel 420 is initially configured with first error control settings (N0, K0, D0) in accordance with a first required QoS QoS0Req.

At time t1, the metering unit METER detects that the downstream throughput drops below the traffic threshold T. At time t2, the metering unit METER issues a TRAF_LOW notification towards the controller CTRL1 as the downstream throughput remains persistently below T for a certain persistence time Ptime (t2 = t1 + Ptime).

Thereupon, the controller CTRL1 sends a L2_REQ request to the layer MPS-TC1. The L2_REQ request includes minimum and maximum required data rate values DR2Range, minimum and maximum required PCB values PCB2Range, and a second required QoS QoS2Req (which is not necessarily identical to QoSOReq).

The layer MPS-TC1 then issues a L2 REQUEST command towards the ATU-R 211 for switching the power mode of the DSL channel 420 from L0 to L2. The L2 REQUEST command includes DR2Range, PCB2Range and QoS2Req parameter values (see step 601 in fig. 6).

The layer MPS-TC2 notifies the controller CTRL2 about the receipt of a L2 REQUEST command by means of a L2_IND notification. The L2_IND notification includes the minimum and maximum required data rate values DR2Range, the minimum and maximum required PCB values PCB2Range, and the required QoS QoS2Req.

The controller CTRL2 determines new bit loading and gain table {bi, gi} yielding a reduced data rate DR2 within the range DR2Range, an actual PCB value PCB2 in line with the required PCB, and adjusted error control parameter values (N2, R2, D2) (see step 602 in fig. 6). The controller CTRL2 requests the layer MPS-TC2 to acknowledge entry into L2 mode by means of a L2_GRT confirmation (provided the data rate, PCB and QoS requirements can be satisfied). The new bit loading and gain table {bi, gi}, the actual PCB value PCB2, the adjusted code rate values (N2, R2) and the adjusted interleaving depth D2 are passed to the layer MPS-TC2 for further inclusion into the L2 GRANT command.

The ATU-R 211 answers the L2 REQUEST command with a L2 GRANT command comprising the new bit loading and gain table {bi, gi}, and the actual PCB value PCB2. The L2 GRANT command further includes adjusted error control parameter values (N2, R2, D2) (see step 603 in fig. 6).

The L2 GRANT command may include further parameters to control PMS-TC framing, such as the overhead period, as well as parameters to control the L2 exit procedure.

The layer MPS-TC1 notifies the controller CTRL1 about the receipt of a L2 GRANT command by means of a L2_GRT_IND notification. The L2_GRT_IND notification includes adjusted error control parameter values (N2, R2, D2).

Upon receipt of the L2 GRANT command, the controller CTRL1 holds back downstream user traffic by sending a back-pressure signal to the layer MPS-TC1 or to another layer (not shown). Dummy bytes are substituted for user traffic and are fed to the error control logic input (see step 604 in fig. 6). When the last meaningful bytes (i.e., carrying user payload) have been processed by the error control logic, the controller CTRL1 sends a L2_CNF confirmation to the layer MPS-TC1. Thereupon, the layer MPS-TC1 issues a SYNC flag towards the ATU-R 211 for acknowledging the good receipt of the L2 GRANT command and the actual entry into L2 mode, which takes place a few DMT symbols after the SYNC flag is issued (see step 605 in fig. 6). Meanwhile, the controller CTRL1 reconfigures the RS encoder and the interleaver with second error control settings (N2, K2, D2) for them to be in force upon entry into L2 mode (see step 606 in fig. 6).

Alternatively, the SYNC flag could be sent back to the ATU-R 211 as soon as the L2 GRANT command is received, yet a larger number of DMT symbols is provisioned between the SYNC flag and the actual entry into L2 mode so as to leave sufficient time for draining and reconfiguration of the error control logic.

The controller CTRL2 is given notice of the SYNC flag receipt by means of a L2_ACK acknowledgment. Thereupon, the controller CTRL2 reconfigures the RS decoder and the de-interleaver with second error control settings (N2, K2, D2) for them to be in force upon entry into L2 mode (see step 607 in fig. 6).

Further L2 TRIM REQUEST commands (not shown) may be issued by the ATU-C 111 (L2-TIME apart) if the desired PCB cannot be committed at once on account of the L2-ATPR constraint.

At time t3, as the downstream traffic increases and goes beyond DR2, the amount of backlogged traffic reaches BLMax, and the metering unit METER issues a TRAF_HIGH notification towards the controller CTRL1.

Thereupon, the controller CTRL1 sends a LO_REQ request to the layer MPS-TC1 to exit the L2 mode as soon as possible.

The layer MPS-TC1 requests the exit from L2 state into L0 state by transmission of a PMD exit sequence towards the ATU-R 211. Thus, the nominal downstream data rate DRO and the reference downstream aggregate transmit power are restored.

The second error control settings (N2, R2, D2) remains in force when switching back to L0 showtime mode, yielding a larger data overhead. More optimal error control settings in accordance with QoS0Req are applied later on, e.g. by issuing a dummy L2 REQUEST command with no power and no rate reduction and then by exiting the L2 state at once.

In an alternative embodiment, a further adjustment for restoring first error control settings (N0, R0, D0) is carried out upon exit from L2 mode.

The fast L2 exit procedure is triggered first, with the nominal {bi, gi}, and thus the nominal data rate DR0, being restored. Next, a flushing of the error control logic at the L0 nominal data rate and a re-configuration of the error control logic takes place.

For this embodiment, it is beneficial to configure a very small delay value for L2 mode, thereby allowing an even faster re-configuration of the error control logic during this critical L2 exit period (the time during which the back-pressure signal is applied matches approximately the interleaving/deinterleaving delay).

The ATU-C 111 may pass a parameter indicative of which L2 exit mode applies (i.e., with or without further adjustment upon L2 exit) in the L2 REQUEST command. Alternatively, the L2 REQUEST command may contain constraints for both L2 exit modes, and the ATU-R 211 may select the most appropriate mode according to its capabilities and further criteria, and return the selected mode in the L2 GRANT command.

In a further alternative embodiment, the ATU-R 211 determines more optimal error control settings (N0', R0', D0') to be applied upon L2 exit in accordance with the required QoS QoS0Req (e.g., because Seamless Rate Adaptation (SRA) took place since the line initialization and before entry into L2 mode), and returns the more optimal error control settings (N0', R0', D0') in the L2 GRANT command back to the ATU-R 111.

Although the invention has been described with exclusive reference to downstream direction, it is similarly applicable to upstream direction, even if such a provision has not been standardized yet for ADLS2(+).

The invention is similarly applicable to VDSL2 (although L2 mode has not been defined yet for VDSL2) and may substitute for dynamic interleaving, which has been standardized as an optional feature of VDSL2, yet which is hard to implement.

Although the invention has been described with exhaustive reference to DSL communication technology over copper lines and corresponding error control techniques, it is similarly applicable to any communication technology over any communication medium for which dual-power operating modes have been defined, and further to any error control coding, including but not limited to other linear block codes, such as Hamming, Golay or BCH codes, convolutional codes, etc.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. A transceiver unit (111) adapted to operate a communication channel (420) in a first reference-power operating mode (L0), to configure error control over said communication channel in accordance with a first required Quality of service QoS (QoS0Req) and a first nominal data rate (DR0) achievable over said communication channel during said first operating mode, and to issue a message (L2 REQUEST) whereby a peer transceiver unit (211) is requested to switch operation of said communication channel from said first operating mode to a second low-power operating mode (L2),
   wherein said transceiver unit is further adapted to encode a second required QoS (QoS2Req) achievable over said communication channel during said second operating mode into said message, said second required QoS comprising a delay upper bound ($\Delta$Max) or an Impulse Noise Protection INP lower bound (INPMin), and to adjust error control over said communication channel concomitantly with entry into said second operating mode and in accordance with said second required QoS and a second reduced data rate (DR2) achievable over said communication channel during said second operating mode.

2. A transceiver unit (111, 211) according to claim 1,
   wherein said adjustment is further made in accordance with said first required QoS and said first data rate.

3. A transceiver unit (111, 211) according to claim 1,
   wherein said transceiver unit is further adapted to further adjust error control over said communication channel concomitantly with exit from said second operating mode, which further adjustment being made in accordance with said first required QoS and said first data rate.

4. An access node (110) comprising a transceiver unit (111) according to any of claims 1 to 3.

5. A transceiver unit (211) adapted to operate a communication channel (420) in a fi rst reference-power operating mode (L0), to configure error control over said communication channel in accordance with a first required Quality of Service QoS (QoS0Req) and a first nominal data rate (DR0) achievable over said communication channel during said first operating mode, and to receive a message (L2 REQUEST) whereby a peer transceiver unit (111) requests to switch operation of said communication channel from said first operating mode to a second low-power operating mode (L2),
   wherein said transceiver unit is further adapted to decode a second required QoS (QoS2Req) achievable over said communication channel during said second operating mode from said message, said second required QoS comprising a delay upper bound ($\Delta$Max) or an Impulse Noise Protection INP lower bound (INPMin), and to adjust error control over said communication channel concomitantly with entry into said second operating mode and in accordance with said second required QoS and a second reduced data rate (DR2) achievable over said communication channel during said second operating mode.

6. A transceiver unit (211) according to claim 5,
   wherein said transceiver unit is adapted to encode parameter values (N2, R2, D2) indicative of said adjustment into a further message (L2 GRANT) sent to said peer transceiver unit in response to said request.

7. A subscriber device (210) comprising a transceiver uni t (211) acco rdi ng to claim 5 or 6.

8. A method comprising the steps of operating a communication channel (420) in a first reference-power operating mode (L0), configuring error control over said communication channel in accordance with a first required Quality of Service QoS (QoS0Req) and a first nominal data rate (DR0) achievable over said communication channel during said first operating mode, and issuing a message (L2 REQUEST) whereby switching operation of said communication channel from said first operating mode to a second low-power operating mode (L2) is requested,
   wherein said method further comprises the steps of encoding a second required QoS (QoS2Req) achievable over said communication channel during said second operating mode into said message, said second required QoS comprising a delay upper bound ($\Delta$Max) or an Impulse Noise Protection INP lower bound (INPMin), and adjusting error control over said communication channel concomitantly with entry into said second operating mode and in accordance with said second required QoS and a second reduced data rate (DR2) achievable over said communication channel during said second operating mode.

9. A method comprising the steps of operating a communication channel (420) in a first reference-power operating mode (L0), configuring error control over said communication channel in accordance with a first required Quality of Service QoS (QoS0Req) and a first nominal data rate (DR0) achievable over said communication channel during said first operating mode, and receiving a message (L2 REQUEST) whereby switching operation of said communication channel from said first operating mode to a second low-power operating mode (L2) is requested, wherein said method further comprises the steps of decoding a second required QoS (QoS2Req) achievable over said communication channel during said second operating mode from said message, said second required QoS comprising a delay upper bound ($\Delta$Max) or an Impulse Noise Protection INP lower bound (INPMin), and adjusting error control over said communication channel concomitantly with entry into said second operating mode and in accordance with said second required QoS and a second reduced data rate (DR2) achievable over said communication channel during said second operating mode.

**Patentansprüche**

1. Transceiver-Einheit (111), dazu ausgelegt, einen Kommunikationskanal (420) in einem ersten Referenzleistungs-Betriebsmodus (L0) zu betreiben, die Fehlerüberwachung über den besagten Kommunikationskanal gemäß einer ersten geforderten Dienstgüte bzw. QoS (QoS0Req) und einer ersten nominalen Datenrate (DR0), welche über den besagten Kommunikationskanal während des besagten ersten Betriebsmodus erreichbar sind, zu konfigurieren, und eine Nachricht (L2 REQUEST), in welcher eine Peer-Transceiver-Einheit (211) aufgefordert wird, den Betrieb des besagten Kommunikationskanals von dem besagten ersten Betriebsmodus in einen zweiten Niedrigleistungs-Betriebsmodus (L2) umzuschalten, auszugeben, wobei die besagte Transceiver-Einheit weiterhin dazu ausgelegt ist, eine zweite geforderte QoS (QoS2Req), die über den besagten Kommunikationskanal während des besagten zweiten Betriebsmodus erreichbar ist, in die besagte Nachricht zu codieren, wobei die besagte zweite geforderte QoS eine obere Verzögerungsgrenze ($\Delta$Max) oder eine untere Grenze für den Impulsrauschschutz bzw. INP (INPMin) umfasst, und die Fehlerüberwachung über den besagten Kommunikationskanal gleichzeitig mit dem Übergang in den besagten zweiten Betriebsmodus und gemäß der besagten zweiten geforderten QoS und einer zweiten reduzierten Datenrate (DR2), welche über den besagten Kommunikationskanal während des besagten zweiten Betriebsmodus erreichbar sind, anzupassen.

2. Transceiver-Einheit (111, 211) nach Anspruch 1, wobei das besagte Anpassen weiterhin gemäß der besagten ersten geforderten QoS und der besagten ersten Datenrate erfolgt.

3. Transceiver-Einheit (111, 211) nach Anspruch 1, wobei die besagte Transceiver-Einheit weiterhin dazu ausgelegt ist, die Fehlerüberwachung über den besagten Kommunikationskanal gleichzeitig mit dem Verlassen des besagten zweiten Betriebsmodus weiterhin anzupassen, wobei das besagte weitere Anpassen gemäß der besagten ersten geforderten QoS und der besagten ersten Datenrate erfolgt.

4. Zugangsknoten (110) mit einer Transceiver-Einheit (111) gemäß einem beliebigen der Ansprüche 1 bis 3.

5. Transceiver-Einheit (211), dazu ausgelegt, einen Kommunikationskanal (420) in einem ersten Referenzleistungs-Betriebsmodus (L0) zu betreiben, die Fehlerüberwachung über den besagten Kommunikationskanal gemäß einer ersten geforderten Dienstgüte bzw. QoS (QoS0Req) und einer ersten nominalen Datenrate (DR0), welche über den besagten Kommunikationskanal während des besagten ersten Betriebsmodus erreichbar sind, zu konfigurieren, und eine Nachricht (L2 REQUEST), in welcher eine Peer-Transceiver-Einheit (111) dazu auffordert, den Betrieb des besagten Kommunikationskanals von dem besagten ersten Betriebsmodus in einen zweiten Niedrigleistungs-Betriebsmodus (L2) umzuschalten, zu empfangen, wobei die besagte Transceiver-Einheit weiterhin dazu ausgelegt ist, eine zweite geforderte QoS (QoS2Req), die über den besagten Kommunikationskanal während des besagten zweiten Betriebsmodus erreichbar ist, aus der besagten Nachricht zu decodieren, wobei die besagte zweite geforderte QoS eine obere Verzögerungsgrenze ($\Delta$Max) oder eine untere Grenze für den Impulsrauschschutz bzw. INP (INPMin) umfasst, und die Fehlerüberwachung über den besagten Kommunikationskanal gleichzeitig mit dem Übergang in den besagten zweiten Betriebsmodus und gemäß der besagten zweiten geforderten QoS und einer zweiten reduzierten Datenrate (DR2), welche über den besagten Kommunikationskanal während des besagten zweiten Betriebsmodus erreichbar sind, anzupassen.

6. Transceiver-Einheit (211) nach Anspruch 5, wobei die besagte Transceiver-Einheit dazu ausgelegt ist, Parameterwerte (N2, R2, D2), die für die besagte Anpassung indikativ sind, in eine weitere Nachricht (L2 GRANT), welche in Antwort auf die besagte Anforderung an die besagte Peer-Transceiver-Einheit gesendet wird, zu codieren.

7. Teilnehmervorrichtung (210) mit einer Transceiver-Einheit (211) gemäß Anspruch 5 oder 6.

**8.** Verfahren, umfassend die Schritte des Betreibens eines Kommunikationskanals (420) in einem ersten Referenzleistungs-Betriebsmodus (L0), des Konfigurierens der Fehlerüberwachung über den besagten Kommunikationskanal gemäß einer ersten geforderten Dienstgüte bzw. QoS (QoSOReq) und einer ersten nominalen Datenrate (DR0), welche über den besagten Kommunikationskanal während des besagten ersten Betriebsmodus erreichbar sind, und des Ausgebens einer Nachricht (L2 REQUEST), in welcher das Umschalten des Betriebs des besagten Kommunikationskanals von dem besagten ersten Betriebsmodus in einen zweiten Niedrigleistungs-Betriebsmodus (L2) angefordert wird,

wobei das besagte Verfahren weiterhin die Schritte des Codierens einer zweiten geforderten QoS (QoS2Req), die über den besagten Kommunikationskanal während des besagten zweiten Betriebsmodus erreichbar ist, in die besagte Nachricht, wobei die besagte zweite geforderte QoS eine obere Verzögerungsgrenze (ΔMax) oder eine untere Grenze für den Impulsrauschschutz bzw. INP (INPMin) umfasst, und des Anpassens der Fehlerüberwachung über den besagten Kommunikationskanal gleichzeitig mit dem Übergang in den besagten zweiten Betriebsmodus und gemäß der besagten zweiten geforderten QoS und einer zweiten reduzierten Datenrate (DR2), welche über den besagten Kommunikationskanal während des besagten zweiten Betriebsmodus erreichbar sind, anzupassen, umfasst.

**9.** Verfahren, umfassend die Schritte des Betreibens eines Kommunikationskanals (420) in einem ersten Referenzleistungs-Betriebsmodus (L0), des Konfigurierens der Fehlerüberwachung über den besagten Kommunikationskanal gemäß einer ersten geforderten Dienstgüte bzw. QoS (QoSOReq) und einer ersten nominalen Datenrate (DR0), welche über den besagten Kommunikationskanal während des besagten ersten Betriebsmodus erreichbar sind, und des Empfangens einer Nachricht (L2 REQUEST), in welcher das Umschalten des Betriebs des besagten Kommunikationskanals von dem besagten ersten Betriebsmodus in einen zweiten Niedrigleistungs-Betriebsmodus (L2) angefordert wird,

wobei das besagte Verfahren weiterhin die Schritte des Decodierens einer zweiten geforderten QoS (QoS2Req), die über den besagten Kommunikationskanal während des besagten zweiten Betriebsmodus erreichbar ist, aus der besagten Nachricht, wobei die besagte zweite geforderte QoS eine obere Verzögerungsgrenze (ΔMax) oder eine untere Grenze für den Impulsrauschschutz bzw. INP (INPMin) umfasst, und des Anpassens der Fehlerüberwachung über den besagten Kommunikationskanal gleichzeitig mit dem Übergang in den besagten zweiten Betriebsmodus und gemäß der besagten zweiten geforderten QoS und einer zweiten reduzierten Datenrate (DR2), welche über den besagten Kommunikationskanal während des besagten zweiten Betriebsmodus erreichbar sind, anzupassen, umfasst.

**Revendications**

**1.** Module émetteur-récepteur (111) adapté pour faire fonctionner un canal de communication (420) dans un premier mode de fonctionnement de puissance de référence (L0), pour configurer un contrôle des erreurs sur ledit canal de communication conformément à une première qualité de service QoS requise (QoS0Req) et à un premier débit de données nominal (DR0) pouvant être obtenus sur ledit canal de communication durant ledit premier mode de fonctionnement, et pour délivrer un message (L2 REQUEST) par lequel on demande à un module émetteur-récepteur pair (211) de faire passer le mode de fonctionnement dudit canal de communication dudit premier mode de fonctionnement à un deuxième mode de fonctionnement à faible puissance (L2),

ledit module émetteur-récepteur étant en outre adapté pour coder une deuxième QoS requise (QoS2Req) pouvant être obtenue sur ledit canal de communication durant ledit deuxième mode de fonctionnement dans ledit message, ladite deuxième QoS requise comprenant une limite supérieure du retard (ΔMax) ou une limite inférieure de protection contre les bruits impulsifs INP (INPMin) et pour ajuster un contrôle des erreurs sur ledit canal de communication simultanément à l'entrée dans ledit deuxième mode de fonctionnement et conformément à ladite deuxième QoS requise et à un deuxième débit de données réduit (DR2) pouvant être obtenus sur ledit canal de communication durant ledit deuxième mode de fonctionnement.

**2.** Module émetteur-récepteur (111, 211) selon la revendication 1, dans lequel ledit ajustement est en outre réalisé conformément à ladite première QoS requise et audit premier débit de données.

**3.** Module émetteur-récepteur (111, 211) selon la revendication 1, ledit module émetteur-récepteur étant en outre adapté pour ajuster davantage le contrôle des erreurs sur ledit canal de communication simultanément à la sortie dudit deuxième mode de fonctionnement, lequel ajustement supplémentaire étant réalisé conformément à ladite première QoS requise et audit premier débit de données.

4. Noeud d'accès (110) comprenant un module émetteur-récepteur (111) selon l'une quelconque des revendications 1 à 3.

5. Module émetteur-récepteur (211) adapté pour faire fonctionner un canal de communication (420) dans un premier mode de fonctionnement de puissance de référence (L0), pour configurer un contrôle des erreurs sur ledit canal de communication conformément à une première qualité de service QoS requise (QoS0Req) et à un premier débit de données nominal (DR0) pouvant être obtenus sur ledit canal de communication durant ledit premier mode de fonctionnement, et pour recevoir un message (L2 REQUEST) par lequel un module émetteur-récepteur pair (111) demande à faire passer le mode de fonctionnement dudit canal de communication dudit premier mode de fonctionnement à un deuxième mode de fonctionnement à faible puissance (L2),
ledit module émetteur-récepteur étant en outre adapté pour décoder une deuxième QoS requise (QoS2Req) pouvant être obtenue sur ledit canal de communication durant ledit deuxième mode de fonctionnement à partir dudit message, ladite deuxième QoS requise comprenant une limite supérieure du retard (∆Max) ou une limite inférieure de protection contre les bruits impulsifs INP (INPMin) et pour ajuster un contrôle des erreurs sur ledit canal de communication simultanément à l'entrée dans ledit deuxième mode de fonctionnement et conformément à ladite deuxième QoS requise et à un deuxième débit de données réduit (DR2) pouvant être obtenus sur ledit canal de communication durant ledit deuxième mode de fonctionnement.

6. Module émetteur-récepteur (211) selon la revendication 5, ledit module émetteur-récepteur étant adapté pour coder des valeurs de paramètres (N2, R2, D2) indiquant ledit ajustement dans un autre message (L2 GRANT) envoyé audit module émetteur-récepteur pair en réponse à ladite demande.

7. Dispositif d'abonné (210) comprenant un module émetteur-récepteur (211) selon la revendication 5 ou 6.

8. Procédé comprenant les étapes de fonctionnement d'un canal de communication (420) dans un premier mode de fonctionnement de puissance de référence (L0), de configuration d'un contrôle des erreurs sur ledit canal de communication conformément à une première qualité de service QoS requise (QoS0Req) et à un premier débit de données nominal (DR0) pouvant être obtenus sur ledit canal de communication durant ledit premier mode de fonctionnement, et de délivrance d'un message (L2 REQUEST) par lequel on demande une opération de commutation dudit canal de communication passant dudit premier mode de fonctionnement à un deuxième mode de fonctionnement à faible puissance (L2),
dans lequel ledit procédé comprend en outre les étapes de codage d'une deuxième QoS requise (QoS2Req) pouvant être obtenue sur ledit canal de communication durant ledit deuxième mode de fonctionnement dans ledit message, ladite deuxième QoS requise comprenant une limite supérieure du retard (∆Max) ou une limite inférieure de protection contre les bruits impulsifs INP (INPMin), et, d'ajustement d'un contrôle des erreurs sur ledit canal de communication simultanément à l'entrée dans ledit deuxième mode de fonctionnement et conformément à ladite deuxième QoS requise et à un deuxième débit de données réduit (DR2) pouvant être obtenus sur ledit canal de communication durant ledit deuxième mode de fonctionnement.

9. Procédé comprenant les étapes de fonctionnement d'un canal de communication (420) dans un premier mode de fonctionnement de puissance de référence (L0), de configuration d'un contrôle des erreurs sur ledit canal de communication conformément à une première qualité de service QoS requise (QoS0Req) et à un premier débit de données nominal (DR0) pouvant être obtenus sur ledit canal de communication durant ledit premier mode de fonctionnement, et de réception d'un message (L2 REQUEST) par lequel on demande une opération de commutation dudit canal de communication passant dudit premier mode de fonctionnement à un deuxième mode de fonctionnement à faible puissance (L2),
dans lequel ledit procédé comprend en outre les étapes de décodage d'une deuxième QoS requise (QoS2Req) pouvant être obtenue sur ledit canal de communication durant ledit deuxième mode de fonctionnement à partir dudit message, ladite deuxième QoS requise comprenant une limite supérieure du retard (∆Max) ou une limite inférieure de protection contre les bruits impulsifs INP (INPMin), et, d'ajustement d'un contrôle des erreurs sur ledit canal de communication simultanément à l'entrée dans ledit deuxième mode de fonctionnement et conformément à ladite deuxième QoS requise et à un deuxième débit de données réduit (DR2) pouvant être obtenus sur ledit canal de communication durant ledit deuxième mode de fonctionnement.

Fig. 1

Fig. 2

Fig. 3

Fig. 4B

Fig. 4A

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7058027 B